Europäisches Patentamt

European Patent Office

Office européen des brevets

(19)

(11) Veröffentlichungsnummer: **0 251 311**
**B1**

# EUROPÄISCHE PATENTSCHRIFT

(12)

(45) Veröffentlichungstag der Patentschrift:
28.02.90

(21) Anmeldenummer: 87109464.5

(22) Anmeldetag: 01.07.87

(51) Int. Cl.⁴: **E06B 9/32**

(54) Sonnenschutzeinrichtung.

(30) Priorität: 04.07.86 DE 3622564

(43) Veröffentlichungstag der Anmeldung:
07.01.88 Patentblatt 88/1

(45) Bekanntmachung des Hinweises auf die Patenterteilung:
28.02.90 Patentblatt 90/9

(84) Benannte Vertragsstaaten:
AT CH DE ES FR GB IT LI

(56) Entgegenhaltungen:
EP-A- 0 199 931

(73) Patentinhaber: Siemens Aktiengesellschaft,
Wittelsbacherplatz 2, D-8000 München 2(DE)

(72) Erfinder: Nebhuth, Thomas, Dipl.-Ing., Obere
Leopoldstrasse 4, D-8630 Coburg(DE)
Erfinder: Löhner, Herbert, Stud.-Ing., Frankenstrasse 16,
D-8643 Küps(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Sonnenschutzeinrichtung für eine Fensteröffnung in einer Fassadenebene, bestehend aus mindestens einer um eine Längsachse drehbar in der Fensteröffnung angeordneten Lamelle aus lichtbrechendem Material, die auf der Oberseite eben ist und auf der Unterseite lückenlos nebeneinander und parallel zu der Längsachse verlaufende Prismen aufweist, die in einer zur Längsachse rechtwinkligen Querschnittsebene die Form eines gleichschenkligen Dreiecks haben, wobei die Hypotenuse von der ebenen Unterseite gebildet wird und die Katheten einen Innenwinkel einschließen, bei dem die Bedingung der Retroreflexion erfüllt ist.

Eine solche durch die Literaturstelle EP-B 0 090 830 bekannte Sonnenschutzeinrichtung hat einen verhältnismäßig kleinen Sperrbereich. Verglichen mit den bis dahin bekannten retroreflektierenden Sonnenschutzeinrichtungen läßt sie viel Zenitlicht in den dahinter liegenden Raum eintreten und braucht trotzdem im Verlauf des Tages und der Jahreszeiten nur wenig nachgestellt zu werden.

Durch die EP-A 0 199 931 (veröffentlicht am 05.11.86) ist bereits vorgeschlagen worden, zum Nachstellen der um ihre Längsachse drehbar angeordneten Lamellen in Abhängigkeit des Sonnenstandes zumindest einer Lamelle in einer Fensteröffnung der Fassadenebene auf ihrer Oberseite eine Lichtsensoranordnung mit einer Abschatteinrichtung für zwei Lichtsensoren zuzuordnen, deren elektrischen Kenngröße von der Größe der bestrahlten Sensorfläche und der Intensität der Strahlung abhängt.

Der Erfindung liegt die Aufgabe zugrunde, eine weitere Lösung für die Nachstellung mit Hilfe einer Lichtsensoranordnung anzugeben, die ohne eine Abschatteinrichtung auskommt und darüber hinaus die Ausblendcharakteristik der Sonnenschutzeinrichtung bei der Regelung mit berücksichtigt.

Ausgehend von einer Sonnenschutzeinrichtung der einleitend beschriebenen Art mit einer von einer Lichtsensoranordnung Gebrauch machenden Sonnenstandsnachregelung wird diese Aufgabe gemäß der Erfindung durch die im Patentanspruch 1 angegebenen Merkmale gelöst.

Der Erfindung liegt die Erkenntnis zugrunde, daß ein Nachregelvorgang der wenigstens einen Lamelle nur erfolgen muß, wenn Sonnenstrahlen durch die Prismen der Lamelle hindurch in den dahinter liegenden Raum eintreten. Bei Anordnen der Lichtsensoranordnung mit einer Abschattvorrichtung auf der Oberseite muß die Lamelle nun so eingestellt werden, daß die Sonnenstrahlen parallel zu der Ebene auf die Lamelle einfallen, die durch ihre Flächennormale bestimmt ist. Hierbei ist der Einstellbereich der Lichtsensoranordnung mit Abschattvorrichtung auf einen Drehwinkel von ca. ± 4° beschränkt. Dieser enge Einstellbereich nutzt den drehwinkelbezogenen Sperrbereich der Lamelle bei weitem nicht aus.

Durch die erfindungsgemäße Anordnung der Lichtsensoren an der Unterseite der Lamelle in der angegebenen Weise, in Verbindung mit einer geeignet gewählten Ansprechschwelle, wird der Sperrbereich der Sonnenschutzeinrichtung für die erforderliche Regelung voll verfügbar gemacht und zwar unabhängig davon, ob die Sonne in Richtung parallel zur Flächennormalen der Lamelle scheint oder ihre Strahlen einen hierzu endlichen Einfallswinkel aufweisen. Dadurch läßt sich bei wesentlich einfacherer Gestaltung und Anordnung der Lichtsensoranordnung die Anzahl der Regelvorgänge über ein Sonnenjahr hinweg wesentlich reduzieren.

Vorteilhafte Ausgestaltungen der Sonnenschutzeinrichtung nach dem Patentanspruch 1 sind in den weiteren Patentansprüchen 2 und 3 angegeben.

In der Zeichnung bedeuten die der näheren Erläuterung der Erfindung dienenden Figuren

Fig. 1 eine schematische perspektivische Ansicht einer Fensteröffnung mit darin angeordneten Lamellen,

Fig. 2 einen Querschnitt entlang der Linie II-II durch eine Lamelle nach Fig. 1,

Fig. 3 das Reflexionsdiagramm einer Lamelle nach Fig.1,

Fig. 4 das Diagramm der Beleuchtungsstärke über dem Höhenwinkel des Sonnenstandes bei bedecktem Himmel,

Fig. 5 ein weiteres Diagramm der Beleuchtungsstärke über den Höhenwinkel des Sonnenstandes bei unbedecktem Himmel,

Fig. 6 der Querschnitt einer Lamelle nach Fig. 2 mit einer Lichtsensoranordnung.

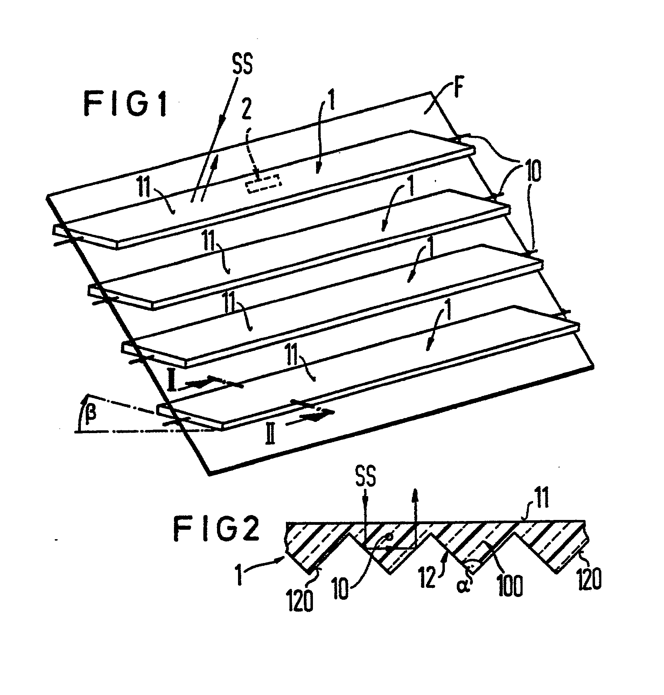

Die in den Figuren 1 und 2 dargestellte bekannte Sonnenschutzeinrichtung besteht aus mehreren Lamellen 1, die um eine Längsachse 10 drehbar in einer Fensteröffnung F angeordnet sind und zur Horizontalebene einen Neigungswinkel ß aufweisen. Jede Lamelle besteht aus brechendem Material, beispielsweise Kunststoff, und hat den in Fig. 2 dargestellten Querschnitt. Sie hat eine ebene Oberseite 11, die den Sonnenstahlen SS - Fig. 1 - zugewandt ist. Auf der Unterseite sind lückenlos nebeneinander Prismen 100 angeordnet, die parallel zur Längsachse 10 verlaufen und von Katheten 120 und der Oberseite 11 - als Hypotenuse - begrenzt sind. Die einzelnen Prismen haben quer zur Längsachse 10 den Querschnitt eines gleichschenkligen Dreieckes, wobei der Innenwinkel zwischen den Katheten so gewählt ist, daß auf die Oberseite 11 auftreffende Sonnenstrahlen - unter noch zu beschreibenden Bedingungen - wieder nach außen reflektiert werden, also nicht in den Raum hinter der Fensteröffnung F eintreten können. Eine der Bedingungen für diese auf der Totalreflexion beruhenden "Retroreflexion" ist, daß der Innenwinkel $\alpha$ gleich ist 90° ± 3° - je nach Material.

Eine Lichtsensoranordnung 2, auf die noch näher einzugehen ist, ist an einer der Lamellen 1 vorgesehen und in Fig. 1 durch ein Rechteck in unterbrochener Linie angedeutet.

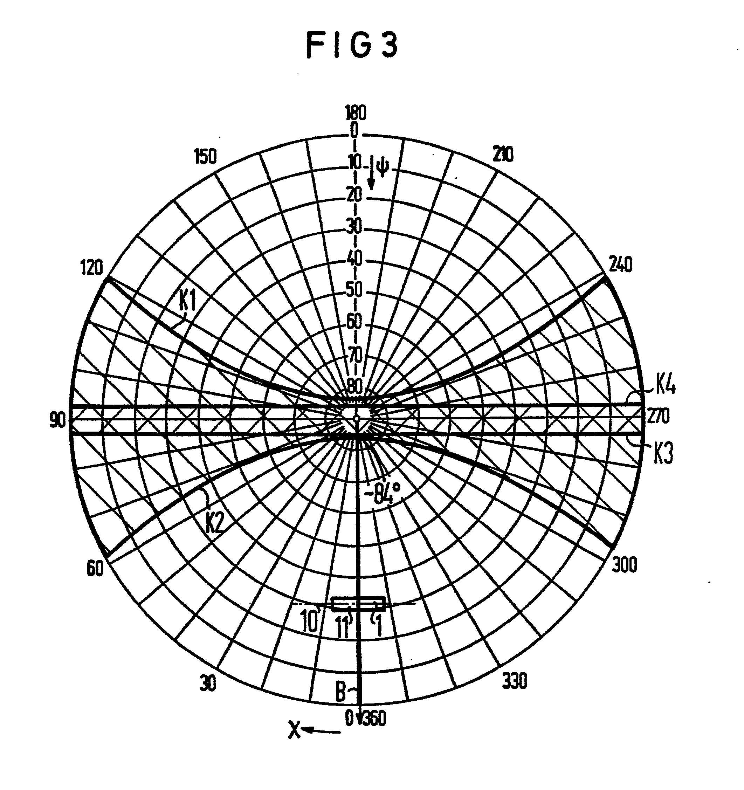

In Fig. 3 ist das Reflexionsdiagramm einer Lamelle gemäß Fig. 1 und 2 bei einem Innenwinkel $\alpha$ von 90° dargestellt: Radial sind die Winkel von "Azimutebenen" eingetragen, die senkrecht auf der Oberseite 11 der Lamelle stehen und deren Azimutwinkel § von der Bezugsgeraden B aus gewählt werden, die rechtwinklig zur Längsachse 10 der Lamelle verläuft.

In konzentrischen Kreisen sind die Höhenwinkel ψ von 0 bis 90° aufgetragen. In dem Reflexionsdiagramm ist der Sperrbereich der Lamelle schraffiert eingetragen und durch Grenzkurven K1 und K2 begrenzt. Zu jedem in dem Sperrbereich liegenden Punkt gehört also ein Azimutwinkel § und ein Höhenwinkel ψ. Alle auf der Oberseite 11 einer Lamelle auftreffenden Strahlen, deren Parameter § und ψ innerhalb des Sperrbereiches liegen, werden total reflektiert. Alle Lichtstrahlen, die mit Parameterkombinationen auf die Oberseite auftreffen, die außerhalb des Sperrbereiches liegen, werden in den Innenraum hinduchgelassen. Die Breite des Sperrbereiches nimmt mit zunehmender Abweichung des Innenwinkels α von 90° ab.

Innerhalb des schraffierten Sperrbereichs ist noch ein kreuzschraffierter Bereich mit den Grenzkurven K3 und K4 angegeben. Bei Nachregelung der Drehstellung der Lamellen 1 nach den Figuren 1 und 2 um die Längsachse 10 in Abhängigkeit der Sonnenstandshöhe ist die Regelung auf diesen kreuzschraffierten Einstellungsbereich begrenzt, wenn die Lichtsensoranordnung 2, wie bereits vorgeschlagen wurde, an der Oberseite 11 einer Lamelle 1 in Verbindung mit einer Abschattvorrichtung angebracht wird.

Durch die Anordnung der Lichtsensoranordnung 2 auf der Unterseite 12 der Lamelle kann der gesamte in Fig. 3 angegebene schraffierte Sperrbereich in den Grenzkurven K1 und K2 für die Nachstellung nutzbar gemacht werden. Hierbei wird von der wichtigen Erkenntnis ausgegangen, daß die Beleuchtungsstärke Ea bei bedecktem Himmel einerseits und klarem Himmel andererseits einen so großen Unterschied aufweist, daß dieser Unterschied als Regelkriterium herangezogen werden kann.

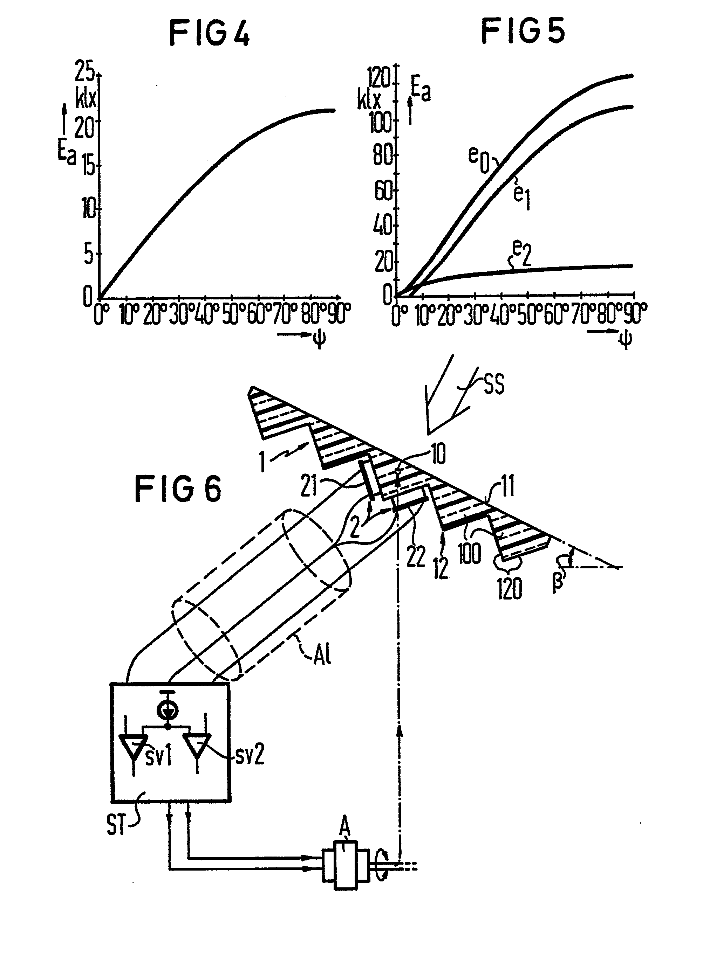

In Fig. 4 ist über dem Höhenwinkel ψ des Sonnenstandes bei bedecktem Himmel die Beleuchtungsstärker Ea in klx aufgetragen. Wie der Kurvenverlauf zeigt, erreicht die Beleuchtungsstärke Ea auch beim höchsten Sonnenstand noch keine 22 klx. Ganz anders sieht dies aus, wenn der Himmel unbedeckt ist.

Das entsprechende Diagramm zeigt Fig. 5. Die Beleuchtungsstärke Ea über dem Höhenwinkel ψ wird hier durch die Kurve eo angegeben, die sich zusammensetzt aus dem Anteil der vom Himmel herrührt und dem Anteil, der von der Sonne herrührt. Der Himmelsanteil ist durch die Kurve e2 und der Sonnenanteil durch die Kurve e1 wiedergegeben. Wie das Diagramm zeigt, wird hier eine Beleuchtungsstärke Ea von 25 klx bereits bei einem Höhenwinkel ψ von etwa 15° über dem Horizont erreicht. Somit wird ein einwandfreies Regelkriterium bei Verwendung von Lichtsensoren an der Unterseite einer Lamelle dann erreicht, wenn die Ansprechschwelle für die automatische Nachregelung so hoch gelegt wird, daß nur bei durch die Lamelle hindurchtretendem Sonnenlicht ausreichender Intensität die Steuerelektronik zum Ansprechen gebracht wird und der Nachstellvorgang beendet wird, sobald die Beleuchtungsstärke an den Lichtsensoren den Ansprechschwellwert wieder unterschreitet.

Wie im Zusammenhang mit den Diagrammen der Figuren 4 und 5 bereits deutlich geworden ist, stellt eine Beleuchtungsstärke Ea von rund 25 klx einen bevorzugten Ansprechwert dar.

Die Anordnung der Lichtsensoranordnung 2 an der Unterseite 12 einer Lamelle 1 entsprechend Fig. 2 zeigt Fig. 6. Die beiden hinsichtlich ihrer elektrischen Kenndaten gleichen Lichtsensoren 21 und 22 sind dabei gegenüberliegend an den beiden Katheten 120 des Prismas 100 angeordnet, das die Längsachse 10, um die die Lamelle 1 drehbar ist, aufnimmt. Die optoelektronische Wandler darstellenden Lichtsensoren 21 und 22 geben eine der Beleuchtungsstärke Ea entsprechende elektrische Größe über die Anschlußleitung AL an zwei Schwellwertschalter sv1 und sv2 auf der Eingangsseite der Steuerelektronik ST ab. Hierbei ist jedem der beiden Schwellwertschalter eine bestimmte Drehrichtung für den zu steuernden Antrieb A zugeordnet. Mittels des Antriebs A wird der Neigungswinkel ß der Lamelle 1 gegen die Horizontale dann und solange in der durch den ansprechenden Schwellwertschalter sv1 bzw. sv2 vorgegebenen Drehrichtung nachgestellt, bis die Beleuchtungsstärke Ea an dem dem ansprechenden Schwellwertschalter zugehörigen Lichtsensor 21 bzw. 22 wieder unter den vorgegebenen Ansprechwert von 25 klx abgefallen ist, d.h. die Retroreflexion der Lamelle hinsichtlich der einfallenden Sonnenstrahlen SS erneut erfült ist.

Die Ansprechschwelle der Schwellwertschalter sv1 und sv2 der Steuerelektronik ST kann in einfacher Weise durch einen einstellbaren Bezugsspannungswert realisiert werden, mit dem die von den Lichtsensoren 21, 22 abgegebenen, der gemessenen Beleuchtungsstärke proportionalen Spannungswerte verglichen werden und in Abhängigkeit des Vergleichs gegebenenfalls eine Nachstellung des Neigungswinkels ß der Lamelle 1 herbeigeführt wird.

In ihrer Einstellung steuerbare Sonnnenschutzeinrichtungen kommen insbesondere für Fenster bei nach Süden ausgerichteten Fassaden von Gebäuden sowie bei Lichtöffnun gen in Dächern zur Anwendung. Die Lamellen werden dabei im Zwischenraum zwischen zwei Glasscheiben angeordnet und auf diese Weise vor Feuchtigkeit und Staub geschützt.

**Patentansprüche**

1. Sonnenschutzeinrichtung für eine Fensteröffnung (F) in einer Fassadenebene (E), bestehend aus mindestens einer um eine Längsachse (10) drehbar in der Fensteröffnung (F) angeordneten Lamelle (1) aus lichtbrechendem Material, die auf der Oberseite (11) eben ist und auf der Unterseite (12) lückenlos nebeneinander und parallel zu der Längsachse (10) verlaufende Prismen (100) aufweist, die in einer zur Längsachse (10) rechtwinkligen Querschnittsebene die Form eines gleichschenkligen Dreieckes haben, wobei die Hypotenuse von der ebenen Unterseite (12) gebildet wird und die Katheten (120) einen Innenwinkel (α) einschließen, bei dem die Bedingung der Retroreflektion erfüllt ist und bei der zumindest eine Lamelle (1) in einer Fensteröffnung (F) eine zwei Lichtsensoren (21, 22) umfassende Lichtsensoranordnung (2) trägt, die im Zusammenwirken mit einer Steuerelektronik (ST) einen Antrieb (A) für die Dreheinstellung der mindestens einen Lamelle (1) um ihre Längsachse (10) so steuert, daß die Bedingung der Retroreflexion für die direkte Sonneneinstrahlung unabhängig vom Sonnenstand weitestgehend erfüllt ist, **dadurch gekennzeichnet,** daß die beiden Lichtsensoren (21, 22) der Lichtsensoranordnung (2) gegenüberliegend an den beiden Katheten (120) eines der Prismen (100) an der Unterseite (12) einer Lamelle (1) angeordnet sind und daß jedem der beiden Lichtsensoren in der Steuerelektronik (ST) ein Schwellwertschalter (sv1, sv2) für eine bestimmte Drehrichtung des Antriebs (A) zugeordnet ist.

2. Sonnenschutzeinrichtung nach Anspruch 1, **dadurch gekennzeichnet,** daß die Schwellwerte der Schwellwertschalter (sv1, sv2) so bemessen sind, daß jeder der den Antrieb schaltenden Schwellwertschalter nur anspricht, wenn auf den zugeordneten Lichtsensor (21, 22) Sonnenstrahlen treffen, deren Intensität eine vorgegebene Beleuchtungsstärke überschreitet.

3. Sonnenschutzanordnung nach Anspruch 2, **dadurch gekennzeichnet,** daß die Ansprechschwelle der Schwellwertschalter (sv1, sv2) für eine Beleuchtungsstärke (Ea) > 25 klx bemessen ist.

## Revendications

1. Dispositif de protection solaire pour une ouverture de fenêtre (F) ménagée dans le plan (E) d'une façade, constitué par au moins une lamelle (1) réalisée en un matériau réfringent, qui est montée rotative autour d'un axe longitudinal (10) dans l'ouverture de fenêtre (F), qui est plane au niveau de sa face supérieure (11) et qui comporte, sur sa face inférieure (12), des prismes (100) disposés côte-à-côte sans intervalle, parallèlement à l'axe longitudinal (10) et possédant, dans un plan de coupe transversale perpendiculaire à l'axe longitudinal (10), la forme d'un triangle isocèle, dont la base est formée par la face inférieure plane (12), tandis que les autres égaux (120) font entre eux un angle intérieur (α), pour lequel la condition de rétroréflexion est satisfaite, et dans lequel au moins une lamelle (1) située dans une ouverture de fenêtre (F) porte un dispositif (2) à capteurs de lumière, qui comprend deux capteurs de lumière (21, 32) et commande, en coopération avec des systèmes électroniques de commande (ST), un dispositif d'entraînement (A) servant à régler la position en rotation d'au moins une lamelle (1) autour de son axe longitudinal (10) de manière que la condition de rétroréflexion pour le rayonnement solaire direct soit satisfaite dans une large mesure indépendamment de la position du soleil, caractérisé par le fait que les deux capteurs de lumière (21, 22) du dispositif (2) sont disposés, à l'opposé l'un de l'autre, sur les deux côtés (120) de l'un des prismes (100), sur la face inférieure (12) d'une lamelle (1), et qu'à chacun des deux capteurs de lumière est associé, dans le système électronique de commande (ST), un commutateur à valeur de seuil (sv1, sv2) pour un sens de rotation déterminé du dispositif d'entraînement (A).

2. Dispositif de protection solaire suivant la revendication 1, caractérisé par le fait que les valeurs de seuil des commutateurs à valeur de seuil (sv1, sv2) sont choisies de manière que chacun des commutateurs à valeur de seuil qui activent le dispositif d'entraînement, ne répond que lorsque des rayons solaires, dont l'intensité dépasse une intensité d'éclairement prédéterminée, tombent sur le capteur de lumière (21, 22) associé.

3. Dispositif de protection solaire suivant la revendication 2, caractérisé par le fait que le seuil de réponse des commutateurs à valeur de seuil (sv1, sv2) est réglé pour une intensité d'éclairement (Ea) > 25 k.lux.

## Claims

1. Device for protection from the sun for a window opening (F) in a planar facade (E), comprising at least one slat (1, of refractive material, which slat is arranged in the window opening (F), is rotatable about a longitudinal axis (10), has a plane upper side (11), and on the underside (12) has prisms (100) which are arranged adjacent to one another, without gaps, and run parallel to the longitudinal axis (10), and which, in reference to a cross-sectional plane perpendicular to the longitudinal axis (10), have the form of an isosceles triangle, the hypotenuse being formed by the plane underside (12) and an internal angle (α) being included between the two other legs (120) such as to fulfil the condition for retroreflection, and wherein at least one slat (1) in a window opening (F) carries a light sensor arrangement (2) comprising two light sensors (21, 22), which, in cooperation with control electronics (ST), controls a drive (A) for the rotational setting of at least one slat (1) about its longitudinal axis (10) in such a way that the condition for retroreflection for the direct solar radiation is fulfilled to a maximum extent independently of the solar elevation, characterised in that the two light sensors (21, 22) of the light sensor arrangement (2) are arranged opposite on the two legs (120) of one of the prisms (100) on the underside (12) of a slat (1), and in that one threshold level switch (sv1, sv2) is associated with each of the two light sensors in the control electronics (ST) for a given direction of rotation of the drive (A).

2. Device for protection from the sun according to claim 1, characterized in that the threshold values of the threshold level switches (sv1, sv2) are dimensioned such that each of the threshold level switches switching the drive responds only when solar rays of an intensity exceeding a predetermined illumination level impinge on the associated light sensor (21, 22).

3. Device for protection from the sun according to claim 2, characterized in that the response threshold of the threshold level switches (sv1, sv2) is dimensioned for an illumination level (Ea) > 25 klx.

FIG1

FIG2

# FIG 3

FIG 4

FIG 5

FIG 6